# FASCICULE DE BREVET EUROPEEN

(11) **EP 1 273 843 B1**
(45) Date de publication et mention de la délivrance du brevet: **06.09.2006**
(21) Numéro de dépôt: 02356105.3
(22) Date de dépôt: 11.06.2002
(51) Int. Cl.: F16L 33/207, F16L 33/22, F16L 19/12

(54) **Raccord récupérable adaptable aux extrémités d'un tuyau souple armé**
Wiederverwendbare Kupplung zum Verbinden von verstärkten Schlauchenden
Reusable coupling for connecting the ends of a reinforced hose

(30) Priorité: 02.07.2001 FR 0108745
(43) Date de publication de la demande: 08.01.2003
(73) Titulaire: Geci, 69780 Mions (FR)
(72) Inventeur: Favre, Patrick, 69780 Mions (FR); Favre, Alain, 69780 Mions (FR)
(74) Mandataire: Vuillermoz, Bruno

(56) Documents cités:
- WO-A-00/01974
- WO-A-91/00468
- WO-A-91/08414
- DE-U- 29 621 271

## Description

### Domaine Technique

Dans de nombreux secteurs industriels, on se trouve confronté au problème d'avoir à véhiculer des fluides à l'intérieur d'installations comportant des éléments tubulaires raccordés les uns aux autres, de manière permanente ou temporaire, éléments qui dans certains cas, sont constitués de tuyaux ou conduites flexibles, en général à base d'élastomère (silicone notamment) renforcé ou non au moyen d'une structure textile telle qu'une tresse intégrée dans leur paroi

La présente invention a trait à un nouveau type de raccord récupérable permettant une telle connexion.

### Techniques antérieures

En général, pour réaliser la connexion, on fixe à l'intérieur du tube, à son extrémité, un embout qui est serti par une douille extérieure prenant ainsi en sandwich la paroi du tube, cet embout supportant des éléments de raccordement des moyens complémentaires montés quant à eux à la sortie ou à l'entrée de l'ensemble auquel le tuyau doit être relié.

Une telle manière de procéder, qui ressort notamment de l'US-A-3 549 180 ou du FR 1 385 084, présente cependant des inconvénients par le fait que la présence d'un embout inséré à l'intérieur du tuyau entraîne une réduction notable du passage du fluide à ce niveau, ce qui non seulement perturbe son écoulement, mais peut également, dans certains cas, entraîner une rétention de fluide.

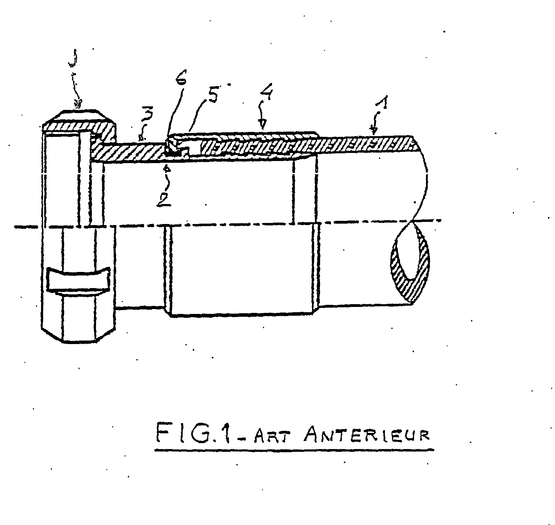

Le Demandeur a proposé une solution selon les enseignements des documents précités qui permet de résoudre ce problème, solution illustrée par la figure 1 annexée, et qui donne une continuité pratiquement parfaite de la paroi interne du tube avec la surface interne de l'embout de raccordement.

D'une manière générale, si l'on se reporte à cette figure 1, pour réaliser le raccord de l'extrémité du tube (1), on insère donc à son extrémité un embout, désigné par la référence générale (2), dont la partie extérieure (3) forme une couronne destinée à supporter les moyens de jonction (J) avec l'élément auquel le tuyau doit être raccordé.

Cela étant fait, on sertit autour du tube (1) ainsi muni de l'embout (2), une douille périphérique (4) emprisonnant ainsi la paroi du tube.

Pour assurer un positionnement parfait, la douille (4) comporte une couronne interne (5) apte à s'encastrer dans une gorge périphérique (6) prévue sur la surface externe de l'embout (3) lors de l'opération de sertissage.

Si une telle manière de procéder permet de réaliser des raccords dont le conduit interne ne comporte pas de zone de rétention de fluide, en revanche, il n'est pas possible de garantir que l'ensemble soit parfaitement aseptique compte tenu du fait que des moisissures, bactéries..., peuvent éventuellement se loger au niveau de la zone de raccordement entre l'embout (3) et l'extrémité (5) de la douille (4).

Dans sa demande de brevet WO 00/01974, le Demandeur a proposé une solution qui non seulement permet d'obtenir un raccord ne comportant pas de zone de rétention de fluide, mais qui, également, permet d'obtenir un ensemble parfaitement aseptique éliminant tous risques d'infiltration par l'extérieur d'éléments, les que moisissures, bactéries..., pouvant entraîner une pollution du fluide véhiculé à l'intérieur de l'installation, cette solution consistant, d'une manière générale, à interposer un joint périphérique entre le bord extrême de la couronne de la douille et celui de la paroi externe de la gorge prévue sur l'embout.

Une telle solution donne entièrement satisfaction dans le cas d'installations fixes, mais comme elle implique un sertissage, elle ne permet cependant pas de réaliser des raccords qui peuvent être démontés rapidement, notamment lorsque l'on souhaite éventuellement changer un tuyau défectueux. Par ailleurs, de par sa conception, un tel raccord ne peut pas être réutilisé.

La solution à ce problème de réalisation d'un raccord récupérable, anti-agrippant et aseptique, ressort des enseignements du brevet français 2 766 901 du Demandeur.

Si cette solution donne satisfaction dans le cas de tuyaux en matière plastique non renforcée, et dont les parois peuvent donc être comprimées relativement aisément, en revanche, elle n'est pas adaptée à la réalisation de raccords à l'extrémité de tuyaux à parois épaisses, comportant un renfort et qui sont pratiquement incompressibles.

Le Document DE 29621271 U décrit un raccord comprenant une bague de blocage comprimée sur un tuyau par vissage d'un manchon externe sur une couronne solidaire du raccord.

En conséquence, à ce jour, pour réaliser des raccords sur de tels tuyaux à parois épaisses et renforcées, seuls les ensembles sertis, du type décrit dans le WO 00/01974, permettent de garantir des caractéristiques mécaniques éliminant tous risques d'arrachement, ainsi que d'éliminer les problèmes de rétention et les risques d'infiltration d'éléments polluants par l'extérieur.

### Exposé de l'invention

D'une manière générale, l'invention vise donc à résoudre l'ensemble des problèmes précités tout en ayant la possibilité de pouvoir réaliser l'assemblage directement par l'utilisateur sur le site même, de pouvoir démonter rapidement l'élément de raccordement, notamment lors d'une opération de maintenance, tout en autorisant sa réutilisation.

D'une manière générale, l'invention concerne donc un raccord récupérable, adaptable aux extrémités d'un tube et qui comprend :
· un embout comportant une extrémité crantée destinée à être insérée à l'intérieur du tube, et dont le diamètre interne correspond sensiblement au diamètre interne de ce dernier, prolongée par une surface annulaire externe au tube, à l'extrémité de laquelle sont prévus les moyens de connexion proprement dits avec l'élément auquel le tube doit être relié ;
· une douille périphérique montée autour du tube et emprisonnant celui-ci en coopération avec la partie crantée de l'embout, ladite douille comportant une couronne interne apte à s'encastrer dans une gorge périphérique prévue à la surface de l'embout, un joint d'étanchéité étant prévu au niveau de cette couronne.

De plus, la douille périphérique de blocage est comprimable radialement, son immobilisation et sa fixation à la périphérie du tube étant obtenues par l'intermédiaire d'un ensemble dit "de connexion" comprenant deux éléments raccordables, montés autour de l'extrémité du tube de part et d'autre de ladite douille de blocage, à savoir :
· un premier élément dit "manchon externe", disposé autour de l'embout et comportant sur sa face arrière une couronne apte à venir en appui contre l'une des extrémités de la douille de serrage et, sur sa face avant, une cage interne formant écrou ;
· un deuxième élément dit "bague de serrage", étant quant à lui positionné autour du tuyau, en aval par rapport à la douille de serrage, ladite bague comportant une partie filetée externe pouvant être vissée à l'intérieur de la partie filetée du premier élément et une chambre interne apte à s'appuyer contre la surface périphérique de la douille, entraînant son écrasement et l'emprisonnement de la paroi du tuyau ainsi que l'encastrement de la couronne interne de ladite douille à l'intérieur de la gorge périphérique prévue à la surface dudit embout, et l'emprisonnement du joint disposé entre ladite couronne et le fond de la gorge.

Comme matériau permettant de réaliser les différents éléments entrant dans la constitution d'un raccord conforme à l'invention, on utilisera de préférence de l'acier inoxydable pour la réalisation de l'embout et du manchon externe de l'ensemble de connexion, alors que la douille périphérique comprimable radialement et la bague de serrage constituant le deuxième élément de l'ensemble de connexion seront réalisées dans une matière plastique technique.

Une telle combinaison de matériaux permet d'éliminer tous risques de grippage lors des opérations de montage et démontage.

Selon une forme de réalisation préférentielle, la douille comprimable est réalisée en matière plastique, comporte sur sa face interne et sur une partie de sa longueur des crans, sa surface externe présentant deux zones de conicité opposées, celle en regard de la surface interne de la bague de serrage venant en appui contre une zone de conicité correspondante prévue dans la chambre de ladite bague.

Pour rendre ladite douille comprimable radialement, des fentes décalées sont prévues sur au moins une partie de la longueur de chaque zone conique de la douille de compression.

### Description sommaire des dessins

L'invention et les avantages qu'elle apporte seront cependant mieux compris grâce à l'exemple de réalisation donné ci-après à titre indicatif, mais non limitatif, et qui est illustré par les figures annexées dans lesquelles :
- la figure 1 illustre l'état de la technique rappelé dans le préambule de la présente demande ;
- les figures 2 et 3 sont des vues en demi-coupe, en élévation, illustrant la mise en place d'un raccord conforme à l'invention avant blocage de la douille de serrage (figure 2), et après serrage de celle-ci (figure 3) ;
- les figures 4 et 5 sont des vues agrandies des zones cerclées des figures 2 et 3 et montrant plus précisément la manière dont est assuré le blocage du joint périphérique et de la paroi du tube ;
- les figures 6 et 7 sont des vues en perspective éclatée montrant les différents composants d'un raccord réalisé conformément à l'invention avant mise en place autour de l'extrémité du tube (figure 6), et après mise en place de ce tube (figure 6), l'extrémité dudit tube n'étant pas représentée dans ces figures afin d'en faciliter la compréhension ;
- la figure 8 est une vue en perspective montrant une variante d'un raccord conforme à l'invention après montage à l'extrémité du tube.

### Manière de réaliser l'invention

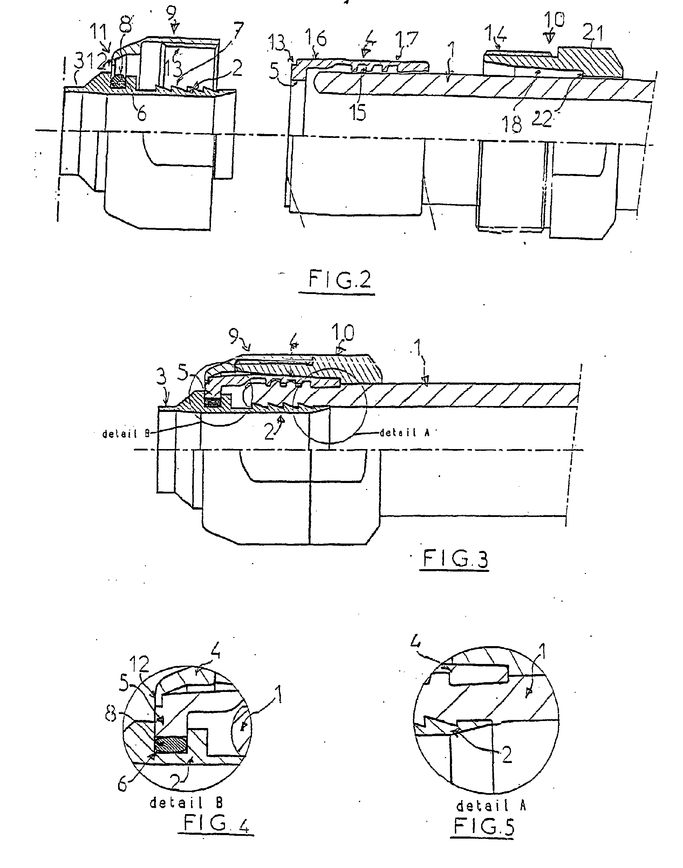

Comme indiqué précédemment, les figures 2 à 7 illustrent un mode de réalisation d'un raccord récupérable conforme à l'invention.

Dans la suite de la description, les mêmes références utilisées pour l'état de la technique antérieur illustré par la figure 1, seront employées pour désigner les mêmes éléments entrant dans la mise en oeuvre de l'invention.

Par ailleurs, il convient de noter que les figures 2, 3 et 6 sont réalisées à l'échelle 1 et illustrent un exemple de réalisation pour un raccord disposé à l'extrémité d'un tube flexible (1) ayant un diamètre interne de 25 mm et une épaisseur de paroi de 6 mm.

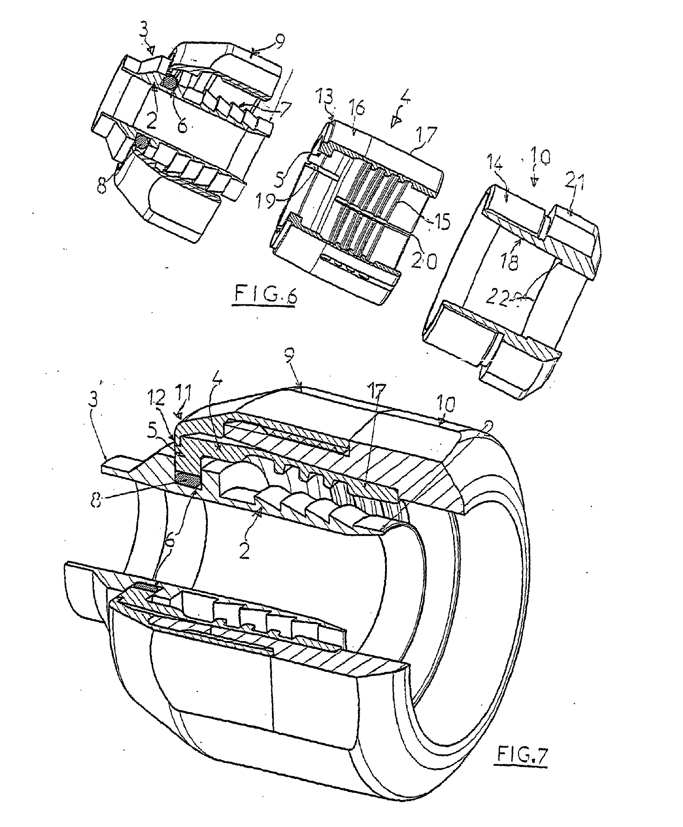

La figure 7 illustre, quant à elle, en vue éclatée, la structure d'un raccord après montage autour du tuyau, représentée à l'échelle 2, ledit tuyau étant omis afin de la rendre plus claire.

Il est évident que l'invention peut être mise en oeuvre sur une gamme importante de tubes dont le diamètre interne peut varier de quelques millimètres jusqu'à 100 mm ou plus, et pour des épaisseurs de paroi pouvant être supérieures ou voisines de 5 mm.

En se reportant aux schémas annexés, le nouveau raccord conforme à l'invention, destiné à être monté à l'extrémité d'un tuyau désigné par la référence générale (1), souple, de préférence armé, se compose donc d'un embout, désigné par la référence générale (2), dont la partie extérieure forme une couronne (3) destinée à supporter des moyens de jonction, non représentés aux figures, avec l'élément auquel le tube (1) doit être raccordé. Cet embout (2) est donc destiné à être introduit à l'intérieur du tube (1) et comporte sur sa longueur destinée à être introduite à l'intérieur dudit tube, une succession de crans (7), dont l'enveloppe périphérique a un diamètre légèrement supérieur au diamètre dudit tube (1).

Entre cette zone crantée (7) et la couronne (3) supportant les moyens de raccordement proprement dits, l'embout comporte une gorge (6) apte à recevoir un joint d'étanchéité (8) ainsi que la couronne interne (5) prévue à l'extrémité de la douille périphérique désignée par la référence (4).

Un tel embout (2) a donc une structure générale du type connu de par l'art antérieur tel qu'illustré à la figure 1.

Tout comme dans l'art antérieur, le maintien de l'embout (2) à l'intérieur du tube est obtenu par l'intermédiaire d'une douille périphérique (4), qui est montée autour du tube (1) et qui emprisonne celui-ci en coopération avec la partie crantée (7) de l'embout.

Cette douille (4) comporte également à l'une de ses extrémités, une couronne interne (5) apte à s'encastrer dans la gorge périphérique (6) prévue à la surface de l'embout (2), un joint d'étanchéité (8) étant prévu au niveau de cette couronne et disposée à l'intérieur de la gorge.

Conformément à l'invention, pour assurer le maintien et le blocage de la douille, cette dernière a une structure telle qu'elle soit comprimable radialement. Pour ce faire, son immobilisation et sa fixation autour de la périphérie du tube est obtenue par l'intermédiaire d'un ensemble dit "de connexion" comportant deux éléments raccordables, désignés respectivement par les références générales (9) et (10), et qui sont montés autour de l'extrémité du tube (1) de part et d'autre de la douille de blocage (4).

Le premier élément (9), dit "manchon externe", est donc disposé autour de l'avant de l'embout et comporte, sur sa face arrière (11), une couronne ouverte (12) orientée en direction de l'axe longitudinal de l'ensemble, couronne apte à venir en appui contre une gorge périphérique (13) prévue, quant à elle, sur la face avant de la douille de serrage (4). La couronne (12) a un diamètre tel qu'elle permet le passage librement de l'embout. Par ailleurs, sur sa face avant, le manchon (9) présente, sur sa face avant, une cage interne (13) formant écrou.

Le deuxième élément constituant l'ensemble de connexion est constitué par une bague (10) dite "bague de serrage". Cette bague (10) est positionnée quant à elle autour du tuyau (1), en aval par rapport à la douille de serrage (4). Elle comporte une partie filetée externe (14) qui peut être vissée à l'intérieur de la partie filetée (13) du premier élément (9).

Selon une forme préférentielle de réalisation, l'embout et le manchon externe (9) sont réalisés en acier inoxydable, alors que la douille comprimable (4) ainsi que la bague de serrage (10) sont, quant à elles, réalisées dans une matière plastique technique, éliminant ainsi tous risques de grippage lors des opérations de montage et de démontage.

Dans la forme de réalisation illustrée, la douille comprimable (4) est donc réalisée en matière plastique. Elle comporte, sur sa face interne, des crans (15). Sa surface externe présente, quant à elle, deux zones de conicité opposées (16) et (17). La zone de conicité arrière (17) est destinée à venir en regard avec une zone de conicité (18) correspondante prévue à l'intérieur de la bague de serrage (10).

Dans la forme de réalisation illustrée, pour rendre la douille (4) comprimable, des fentes radiales, décalées, sont prévues sur au moins une partie de la longueur de chaque zone conique (16,17) de la douille de compression (4).

A titre d'exemple, la zone (16) comporte quatre fentes (19) ayant une largeur de 2 mm, une longueur de 10 mm, et décalées de 90° les unes par rapport aux autres.

La zone (17) comporte, quant à elle, six fentes (20) décalées de 60° les unes par rapport aux autres. Ces fentes ont également une largeur de 2 mm et une longueur de 25 mm. Ces fentes (20) sont décalées axialement par rapport aux fentes (19).

Enfin, la bague de serrage (10) comporte des moyens facilitant l'opération de vissage des deux éléments (9,10). Pour ce faire, l'extrémité (21) de ladite bague peut présenter sur sa face extérieure des pans autorisant l'utilisation d'une clé.

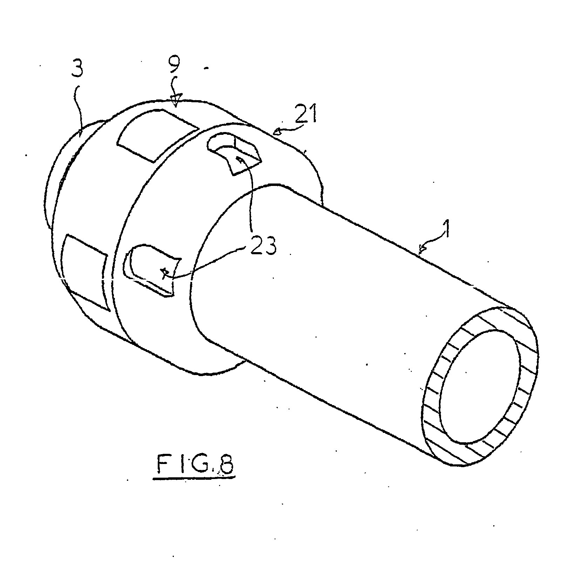

Avantageusement, comme cela ressort du mode de réalisation illustré à la figure 8, au lieu de prévoir des pans plats sur la tête de serrage (21), il peut être envisagé de prévoir plusieurs gorges (23), le serrage étant alors réalisé par l'intermédiaire d'un outil comportant des griffes qui viennent s'encastrer dans lesdits évidements.

Pour la mise en oeuvre du dispositif conforme à l'invention, on procède de la manière suivante.

Dans une première phase opératoire, on dispose, autour du tube (1), la bague de serrage (10) qui peut donc coulisser librement sur celui-ci. La douille comprimable (4) conforme à l'invention est alors positionnée également autour de l'extrémité du tube (1).

Le manchon (9) est alors mis en place autour de l'extrémité du tube et vient recouvrir le manchon. Cela étant fait, on insère en force l'embout (2), de telle sorte que l'extrémité du tube (1) prenne appui contre les crans (7) que comporte l'embout, et soit positionnée à proximité de la paroi définissant la gorge périphérique (6) dans laquelle est positionné un joint (8).

Pour réaliser le blocage et l'immobilisation de l'ensemble autour de l'extrémité du tube, il suffit alors, au moyen d'une clé, de visser la bague de serrage (10) à l'intérieur de la partie filetée (13) du manchon externe (9). Lors de cette opération, la surface conique (18) de la bague (10) s'appuie donc sur la surface conique correspondante (17) de la bague, entraînant ainsi la flexion et la compression des branches crantées que comporte cette bague. Lorsque l'on arrive en fin de course, la zone conique (16) de la douille s'appuie contre une rampe prévue à l'intérieur du manchon (9), ce qui provoque le fléchissement de cette zone (16) de la douille et entraîne l'encastrement de la couronne interne (5) prévue à l'extrémité de la douille à l'intérieur de la gorge (6) prévue sur l'embout et dans lequel a été préalablement disposé le joint périphérique.

L'ensemble étant complètement monté, on obtient un maintien parfait du tube entre la douille de serrage (4) et l'embout (2).

Par ailleurs, la douille (4) étant maintenue emprisonnée entre le retour périphérique (12) et la paroi arrière (22) formée par le retour interne de la bague (21), on obtient un double accrochage éliminant tout risque d'arrachement et conférant à l'ensemble des caractéristiques mécaniques au moins équivalentes, si ce n'est supérieures, aux ensembles réalisés antérieurement par sertissage, tout en conservant la possibilité de pouvoir démonter aisément ledit ensemble pour une éventuelle intervention.

## Revendications

1. Raccord récupérable adaptable aux extrémités d'un tube, comprenant :
· un embout (2) comportant une extrémité crantée (7) destinée à être insérée à l'intérieur du tube, et dont le diamètre interne correspond sensiblement au diamètre interne de ce dernier, prolongée par une surface annulaire (3) externe au tube, à l'extrémité de laquelle sont prévus les moyens de connexion proprement dits avec l'élément auquel le tube doit être relié
· une douille périphérique déblocage (4) apte à être montée autour du tube (1) en emprisonnant celui-ci en coopération avec la partie crantée (7) de l'embout (2), ladite douille (4) comportant une couronne interne (5) apte à s'encastrer dans une gorge (6) périphérique prévue à la surface de l'embout, un joint d'étanchéité (8) étant prévu au niveau de cette couronne, dans lequel la douille périphérique de blocage (4) est comprimable radialement, son immobilisation et sa fixation à la périphérie du tube (1) étant obtenues par l'intermédiaire d'un ensemble de connexion comprenant deux éléments raccordables (9,10), aptes à être montés autour de l'extrémité du tube (1) de part et d'autre de ladite douille périphérique de blocage (4), et comprenant :
· un premier élément (9) formant manchon externe ; disposé autour de l'embout et comportant sur sa face arrière une couronne (12) apte à venir en appui contre l'une des extrémités de la douille de serrage (4) et, sur sa face avant, une cage interne formant écrou (13);
· un deuxième élément formant bague de serrage "(10), étant quant à lui apte à être positionné autour du tuyau (1), en aval par rapport à la douille de serrage (4), ladite bague (10) comportant une partie filetée (14) externe pouvant être vissée à l'intérieur de la partie filetée du premier élément (9) et une chambre interne (18) apte à s'appuyer contre la surface périphérique (17) de la douille (4), entraînant son écrasement et l'emprisonnement de la paroi du tuyau (1) ainsi que l'encastrement de la couronne (5) interne de ladite douille (4) à l'intérieur de la gorge périphérique (6) prévue à la surface de l'embout (2), et l'emprisonnement du joint (8) disposé entre ladite couronne et le fond de la gorge.

2. Raccord selon la revendication 1, **caractérisé en ce que** la douille comprimable (4) est réalisée en matière plastique, comporte sur sa face interne et sur une partie de sa longueur des crans (15), sa surface externe présentant deux zones de conicité opposées (16, 17), celle (17) en regard de la surface interne (18) de la bague de serrage (10) venant en appui contre une zone de conicité correspondante prévue dans la chambre de ladite bague.

3. Raccord selon la revendication 1, **caractérisé en ce que** la douille (4) comporte des fentes décalées (19,20) sur au moins une partie de la longueur de chaque zone conique (16,17) de la douille de compression (4).

4. Raccord selon l'une des revendications 1 à 3, **caractérisé en ce que** l'embout (2) et le manchon externe (9) de l'ensemble de connexion sont réalisés en acier inoxydable, alors que la bague de serrage (10) et la douille périphérique (4) sont réalisées en matière plastique technique.

## Claims

1. Reusable coupling adaptable to the ends of a tube, comprising:
• a nipple (2) comprising a toothed end (7) designed to be inserted into the tube, its inside diameter corresponding approximately to the inside diameter of the tube, the said end being continued by an annular surface (3) external to the tube, at the end of which are the actual means of connection to the part to which the tube is to be connected;
• a peripheral locking ferrule (4), intended to be mounted around the tube (1) by imprisoning the latter in engagement with the toothed part (7) of the nipple (2), the said ferrule (4) comprising an inward annulus (5) capable of fitting into a peripheral groove (6) on the surface of the nipple, while a seal (8) is provided at the location of this annulus, in which the peripheral locking ferrule (4) is radially compressible and is immobilized and fixed to the periphery of the tube (1) by a connection assembly comprising two connectable parts (9, 10), intended to be mounted around the end of the tube (1) on either side of said peripheral locking ferrule (4), and comprising :
■ a first part (9) forming an outer sleeve, positioned around the nipple and comprising on its rear face an annulus (12) capable of bearing against one of the ends of the clamping ferrule (4) and, on its front face, an internal cage forming a nut (13);
■ a second part forming a clamping ring (10), intended to be positioned around the pipe (1), downstream with respect to the clamping ferrule (4), the said ring (10) comprising an external threaded portion (14) that can be screwed into the threaded portion of the first part (9) and an internal chamber (18) capable of bearing against the peripheral surface (17) of the ferrule (4), thereby crushing it and imprisoning the wall of the pipe (1), as well as pushing the inward annulus (5) of the said ferrule (4) into the peripheral groove (6) on the surface of the nipple (2), and imprisoning the seal (8) between the said annulus and the bottom of the groove.

2. Coupling according to claim 1, **characterized in that** the compressible ferrule (4) is made of plastic and comprises teeth (15) on its internal face and along part of its length, its external surface having two oppositely tapering regions (16, 17), the region (17) facing the internal surface (18) of the clamping ring (10) bearing against a region of corresponding taper provided in the chamber of the said ring.

3. Coupling according to claim 1, **characterized in that** the ferrule (4) comprises staggered slits (19, 20) occupying at least part of the length of each tapering region (16, 17) of the compression ferrule (4).

4. Coupling according to one of claims 1 to 3, **characterized in that** the nipple (2) and the outer sleeve (9) of the connection assembly are made of stainless steel, while the clamping ring (10) and the peripheral ferrule (4) are made of an engineering plastic.

## Patentansprüche

1. Wiederverwendbare Kupplung, die an die Enden eines Schlauchs anpaßbar ist, umfassend:
- ein Anschlußstück (2), welches ein geripptes Ende (7) aufweist, das dazu bestimmt ist, in das Innere eines Schlauchs eingesteckt zu werden, und dessen Innendurchmesser im wesentlichen dem Innendurchmesser des letzteren entspricht, welches durch eine ringförmige, außerhalb des Schlauchs liegende Fläche (3) verlängert ist, an deren Ende Mittel zur Verbindung mit dem Element, an das der Schlauch angeschlossen werden soll, vorgesehen sind;
- eine periphere Verriegelungshülse (4), die dazu geeignet ist, um den Schlauch (1) herum montiert zu werden, wobei sie diesen mit dem gerippten Teil (7) des Anschlußstücks (2) zusammenwirkend einfaßt, wobei die genannte Hülse (4) einen inneren Bund (5) umfaßt, der dazu geeignet ist, sich in eine periphere Kehle (6) einzufügen, die auf der Oberfläche des Anschlußstücks vorgesehen ist, wobei eine Dichtung (8) im Bereich dieses Bunds vorgesehen ist, wobei die periphere Verriegelungshülse (4) radial komprimierbar ist und ihre Festlegung und Fixierung auf dem Umfang des Schlauchs (1) mittels einer Verbindungsanordnung erreicht wird, die zwei verbindbare Elemente (9,10) umfaßt, die dazu geeignet sind, um das Ende des Schlauchs zu beiden Seiten der genannten peripheren Verriegelungshülse (4) montiert zu werden, und umfassend:
- ein erstes Element (9), welches einen Überwurf bildet, der um das Anschlußstück angeordnet ist und der auf seiner Rückseite einen äußeren Bund (12) aufweist, welcher dazu geeignet ist, gegen eines der Enden der Spannhülse (4) zur Anlage zu kommen, und der an seiner Vorderseite einen Innenmantel aufweist, der eine Mutter (13) bildet;
- ein zweites Element, welches einen Spannring (10) bildet und dazu geeignet ist, vor der Spannhülse (4) um den Schlauch (1) herum angeordnet zu werden, wobei der genannte Ring (10) einen mit einem Außengewinde versehenen Teil (14) aufweist, der in das Innere des Gewindeteils des ersten Elements (9) schraubbar ist, und eine innere Kammer (18), die dazu geeignet ist, sich gegen die Umfangsfläche (17) der Hülse (4) abzustützen, wodurch deren Zusammendrücken und das Einschließen der Wand des Schlauchs (1) sowie das Einfügen des inneren Bunds (5) der Hülse (4) innerhalb der auf der Oberfläche des Anschlußstücks (2) vorgesehenen peripheren Kehle (6) und das Einschließen der zwischen dem genannten Bund und dem Grund der Kehle angeordneten Dichtung (8) bewirkt wird.

2. Kupplung nach Anspruch 1, **dadurch gekennzeichnet, daß** die komprimierbare Hülse (4) aus Kunststoffmaterial hergestellt ist, die an ihrer Innenseite und über einen Teil ihrer Länge Rippen (15) aufweist, wobei ihre Außenseite zwei gegenüberliegende konische Zonen (16,17) aufweist, nämlich diejenige (17) gegenüber der Innenseite (18) des Spannrings (10), welche sich gegen eine Zone entsprechender Konizität abstützt, die in der Kammer des genannten Rings vorgesehen ist.

3. Kupplung nach Anspruch 1, **dadurch gekennzeichnet, daß** die Hülse (4) versetzte Schlitze (19,20) über mindestens einen Teil der Länge jeder konischen Zone (16,17) der kompressiblen Hülse (4) aufweist.

4. Kupplung nach einem der Ansprüche 1 bis 3, **dadurch gekennzeichnet, daß** das Anschlußstück (2) und der Überwurf (9) der Verbindungsanordnung aus rostfreiem Stahl hergestellt sind, wogegen der Spannring (18) und die periphere Hülse (4) aus technischem Kunststoffmaterial hergestellt sind.
